# EUROPEAN PATENT APPLICATION

(11) **EP 0 833 510 A2**
(43) Date of publication of application: **01.04.1998**
(21) Application number: 97116797.8
(22) Date of filing: 26.09.1997
(51) Int. Cl.: H04N 7/16, H04N 7/08

(54) **Method and device for decoding a television signal in a wide-screen reproduction mode**

(30) Priority: 27.09.1996 DE 19640011
(71) Applicant: SONY DEUTSCHLAND GmbH, 50829 Köln (DE)
(72) Inventor: Wagner, Peter, 71334 Waiblingen (DE); Dilly, Altfried, 70191 Stuttgart (DE); Lubbers, Jos, 70190 Stuttgart (DE)
(74) Representative: Müller, Frithjof E., Dipl.-Ing.

(57) **Abstract**

The memory requirement of a decoder for a wide-screen television picture, in particular for a PALplus decoder can be reduced if, according to the invention, the image processing required for ColourPlus image processing and for vertical conversion is, for example, carried out in conjunction in the 16:9 picture reproduction modes with ColourPlus image processing. This combined operation is made possible by the use of a processor operating at double speed or a plurality of processes operating in parallel. A decoder constructed according to the invention and operating with the method according to the invention can likewise process the picture reproduction modes which, in particular according to the PALplus system description, have less memory requirement.

## Description

The invention relates to a method and to a device for decoding a television signal and, in particular, to the decoding of a television signal for wide-screen reproduction in a picture reproduction mode with ColourPlus image processing.

In particular, the invention relates to an improvement to PALplus decoding. Nevertheless, the teaching of the invention may also be used in other wide-screen picture reproduction methods, for example NTSC-EDTV-II, which is used in Japan. Although reference will be made hereafter to PALplus, this is not intended to exclude other wide-screen reproduction methods or EDTV reproduction methods (EDTV = Extended Definition Television).

A method for PALplus decoding and a PALplus decoder have already been specified in the PALplus system description by the PALplus consortium of December 1995. In this case, as shown in Figure 8, the digital 10-bit PALplus input signal is applied to a PAL decoder 3 and to a helper decoder 2. The PAL decoder 3 demodulates the chrominance signals and produces 8-bit C_{B}C_{R} signals, which are sampled at 6.75 MHz. At the same time, a luminance signal Y with 10-bit resolution is produced, sampled at 13.5 MHz and delayed by a suitable time in order to be present simultaneously with the chrominance parts. At this time, the YC_{B}C_{R} signals still contain PAL artefacts. The 430-line letterbox YC_{B}C_{R} signals of the PAL decoder 3 which are present per frame are then ColourPlus preprocessed in a ColourPlus image processing unit 6, Motion Adaptive Colour Plus preprocessing also being useable in this case, which produces 430-line YC_{B}C_{R} signals with greatly reduced PAL artefacts. Simultaneously with the PAL decoding in the PAL decoder 3, the digital 10-bit input signal is processed by the helper decoder 2, which demodulates the helper signal transmitted in the black bands and produces a 144-line helper signal per frame in the baseband. This 144-line helper signal (Yhelper) is delayed by a delay unit 5 in such a way that it arrives simultaneously with the ColourPlus pre-processed YC_{B}C_{R} signals at a vertical conversion unit 7. The vertical conversion unit 7 combines the 430-line letterbox YC_{B}C_{R} signals with the 144-line helper signal, which produces an output signal having 576 active lines with 16:9 aspect ratio.

A disadvantage of this method and of the circuit shown in Figure 8 is that relatively large memories are needed both in the ColourPlus image processing unit 6 and in the vertical conversion unit 7 and the delay unit 5. If arriving television picture signals are to be both ColourPlus image-processed and vertically converted, then a total of about 12 Mbit of 12-bit wide memory is needed for this, for example for 4:1:1-coded picture signals. This memory requirement entails relatively high production costs for a PALplus decoder.

The object of the invention is to provide an improved method and a device for decoding a television signal for wide-screen reproduction in at least one image reproduction mode with ColourPlus image processing, with the aim of reducing production costs.

A method for television signal decoding for at least one wide-screen reproduction mode with ColourPlus image processing is characterized according to the invention in that the image processing required for ColourPlus image processing and for vertical conversion are carried out in conjunction.

Such a combination of the ColourPlus image processing and the image processing needed for the vertical conversion greatly reduces the memory requirement. In a device according to the invention for decoding a television signal in at least one wide-screen reproduction mode with ColourPlus image processing, which device is characterized in that a processor which performs the image processing carries out the ColourPlus image processing and the vertical conversion in conjunction, only a 6-Mbit 12-bit wide memory is needed, for example, for 4:1:1 coded picture signals. This reduction in the memory requirements allows the costs of such a decoder to be reduced considerably.

Advantageous refinements of the method according to the invention and of the device according to the invention are defined in the dependant patent claims relating respectively to the independent claims.

The method according to the invention for television signal decoding is characterized by the following processing steps for processing a frame in the case of 16:9 film reproduction with ColourPlus processing, steps denoted by the same letters being carried out in parallel or substantially in parallel:
a1) digital picture data of a first field signal, which are composed of the data of two helper signals and a centre signal are stored in a first memory FMEM X,
a2) data processing for the data of the previous frame in accordance with the following steps c1) to c5),
b1) the digital data of the first field are read from the first memory FMEM X with data pre-processing in which the data of the two helper signals are interleaved with the data of the centre signal,
b2) the thus pre-processed data of the first field are written to the second memory FMEM Y, the memory locations freed when the first field was read from the first memory FMEM X being occupied by data of a second field, which are composed of the data of two helper signals and a centre signal;
c1) the data of the second field are read from the first memory FMEM X with data pre-processing in which the data of the two helper signals are interleaved with the data of the centre signal, in order to produce the pre-processed data of the second field,
c2) the pre-processed data of the first field (Intra Frame Average Data) are read from the second memory FMEM Y,
c3) ColourPlus processed and vertically converted data of the first field are calculated from the pre-processed data of the first and second fields and are output to a line memory for intermediate storage,
c4) ColourPlus processed and vertically converted data of the second field are calculated from the pre-processed data of the first and second fields, these data being respectively stored in memory locations of the second memory FMEM Y which are occupied by no longer required data,
c5) the memory locations freed in the first memory FMEM X by reading the second field are occupied with the data of a first field of a subsequent frame, which are composed of the data of two helper signals and a centre signal; thereupon
d1) data processing for the subsequent frame in accordance with steps b1) and b2), and
d2) the fully processed data of the second field are read from the second memory FMEM Y and transferred to the line memory.

A further advantageous configuration of the method according to the invention for television signal decoding is characterized by the following processing steps differing from the above processing steps a2), c2), c3), c4) and d2), and the additional processing step c6) for processing a frame in the case of 16:9 camera picture reproduction with ColourPlus processing:
a2') data processing for the data of the previous frame in accordance with the following steps c1) to c5), the averaged colour data of the preceding frame being calculated and read into a second memory FMEM Y simultaneously,
c2') the pre-processed data of the first field and the averaged colour data (Intra Frame Average Data) of the preceding frame are read from the second memory FMEM Y,
c3') ColourPlus processed and vertically converted data of the first field are calculated from the pre-processed data of the first and second fields as well as the averaged colour data of the preceding and current frames and are output to a line memory for intermediate storage,
c4') ColourPlus processed data of the field are calculated from the pre-processed data of the first and second fields and the averaged colour data of the preceding and current frames, these data being respectively stored in memory locations of the second memory FMEM Y which are occupied by no longer required data,
c6') the averaged colour data of this frame are calculated from the pre-processed data of the first and second fields and are stored in memory locations of the second memory FMEM Y which are occupied by the averaged colour data of the previous frame, and
d2') the ColourPlus processed data of the second field are read from the second memory FMEM Y, and ColourPlus processed and vertically converted data are calculated therefrom and output to the line memory.

The device for television signal decoding according to the invention is characterized in that the processor can also perform other picture reproduction modes in accordance with the respective system description.

This can be done very advantageously by omitting the ColourPlus image processing and/or the vertical conversion in the modes which still remain. According to the invention, the processor normally operates with a data rate of the input/output data which is twice the frequency of the data arriving at the first memory FMEM X 10, except for the processing of a normal image reproduction mode with ColourPlus image processing, in which operation is carried out only at a data rate of the input/output data equal to the frequency of the incoming data. Instead of a processor operating at a higher speed, it is naturally also possible to use a plurality operating in parallel.

The invention described in further detail below relates in particular to PALplus decoding in at least one 16:9 picture reproduction mode, the term "normal picture reproduction mode" being intended to mean 4:3 picture reproduction.

The invention and advantageous details will be explained in more detail below in an illustrative embodiment with reference to the drawings, in which:
Fig. 1 shows the block diagram of a PALplus decoder according to the invention;
Fig. 2 shows the arrangement of a device for PALplus decoding, which operates with the method according to the invention;
Fig. 3 shows the structure of the PALplus processor which operates with the method according to the invention, for all 16:9 picture reproduction modes;
Fig. 4 shows a diagram intended to illustrate the PALplus decoding method according to the invention;
Fig. 5 shows the structure of the PALplus processor for the 4:3 ColourPlus mode;
Fig. 6 shows a diagram intended to explain the 4:3 PAL decoding with ColourPlus image processing;
Fig. 7 shows a diagram representing the memory sizes required and the structure and the organization of the memory used according to the invention; and
Fig. 8 shows the structure of a conventional PALplus decoder.

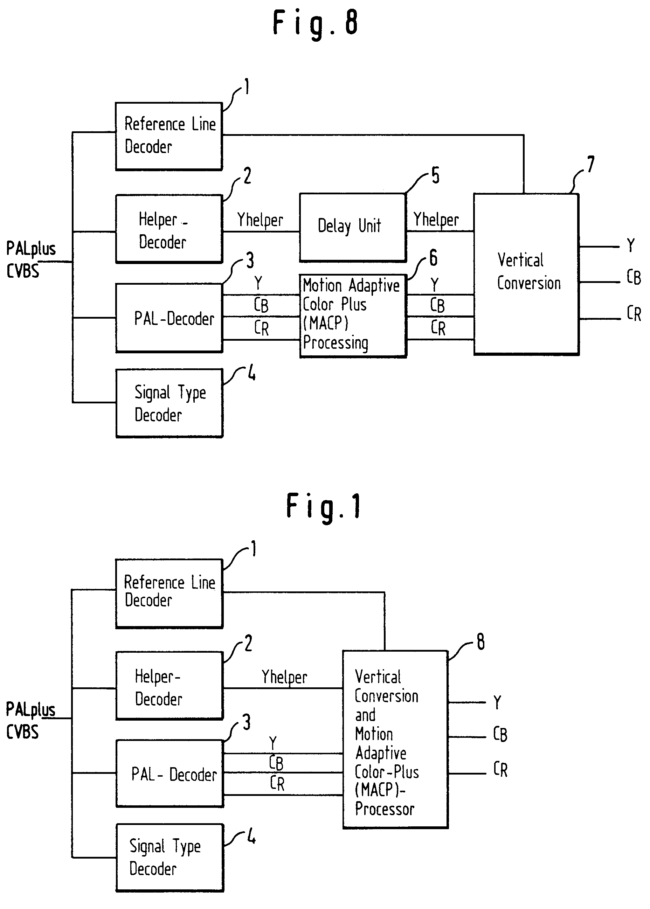

Figure 1 illustrates the PALplus decoder according to the invention. Circuit parts which are the same as in the known PALplus decoder shown in Figure 8 have been given the same reference numbers and will not be described in further detail here. In contrast to the prior art, according to the invention the circuit parts: delay unit 5; Motion Adaptive Colour Plus (MACP) image processing unit 6 and vertical conversion unit 7 are combined to form a vertical conversion and Motion Adaptive Colour Plus (MACP) image processing unit 8. This unit receives the same signals from the modules: reference line decoder 1, helper decoder 2, PAL decoder 3 and signalling decoder 4 as the already mentioned three modules which are present according to the prior art but are combined according to the invention.

By combining these three modules to form an image processing unit 8 which carries out in conjunction the ColourPlus image processing and the image processing needed for the vertical conversion, according to the invention only a 6 Mbit 12-bit wide memory is needed according to the invention for PALplus decoding with 4:1:1-coded picture signals. This is about half the memory requirement according to the prior art. In this context, 4:1:1 coding means that four times as much data is produced for the luminance channel as for each colour channel.

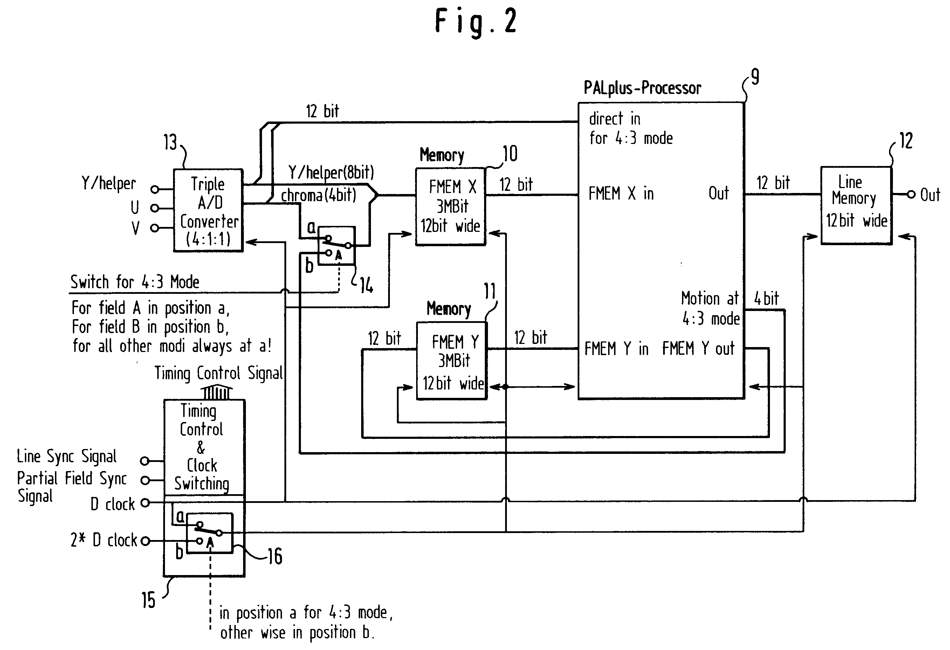

Figure 2 shows the structure of a PALplus decoder according to the invention, which can perform both the 16:9 picture reproduction modes with ColourPlus image processing and other ColourPlus picture reproduction modes in accordance with the PALplus system description. These other PALplus picture reproduction modes are: the 16:9 picture reproduction modes without ColourPlus image processing, the 4:3 picture reproduction mode with ColourPlus image processing and a bypass mode, in which the 4:3 picture signal is sent on as it is without processing.

As input, the PALplus decoder receives the luminance signal Y delivered by a PAL decoder (not shown), the two chrominance signals U, V and the helper signal at a triple A/D converter 13, as well as the line sync signal, the field sync signal, a 1.35 MHz D clock and a 27 MHz 2·D clock at a timing control & clock-signal changeover switching system 15 which contains a switch 16 for changing over the clock signal. The data generated by the triple A/D converter, 8-bit for Y/helper and 4-bit for chroma, are applied to the PALplus processor 9 directly and via the first memory FMEM X 10, the 4-bit wide chroma data to the memory 10 via a switch 14 which selectively applies to the first memory FMEM X 10 either, in switch position a, the 4-bit wide chroma data or, in switch position b, the motion data produced by the PALplus processor 9. The first memory FMEM X 10 has a capacity of 3 Mbit for 12-bit wide data words. After their processing, carried out according to a specific picture reproduction mode and in which they may be intermediately stored in a second memory FMEM Y 11 which has identical size to the first memory FMEM X 10, the picture data applied to the PALplus processor 9 are output to a line memory 12 via a 12-bit wide output for intermediate storage. Timing and control signals are applied to the individual switches, or to the PALplus processor 9 and all the memory elements FMEM X 10, FMEM Y 11 and the line memory 12, by the timing control and clock-signal changeover switching system. Furthermore, the 13.5 MHz D clock signal is applied to the triple A/D converter 13, the input side of the first memory FMEM X 10 and the output side of the line memory 12, while the switch 16 present in the timing control and clock-signal changeover switching system 15 applies either the 13.5 MHz D clock signal or the 27 MHz 2·D clock signal to the second memory FMEM Y 11, the output side of the first memory FMEM X 10, the PALplus processor 9 and the input side of the line memory 12. In this way, irrespective of the processing speed of the PALplus processor 9, a data rate of 13.5 MHz from the PALplus decoder is ensured through the line memory 12 for the PALplus decoded, i.e. reconstructed picture signal. Only in the 4:3 picture reproduction mode with ColourPlus image processing is the switch 16 in the switching position a in which it forwards the 13.5 MHz D clock signal; in all other picture reproduction modes, it is in switch position b, as a result of which the PALplus processor 9 and the memory sides connected to it operate with the 27 MHz clock frequency. In the 4:3 picture reproduction mode, the switch 14 is in position a when a first field A is arriving, and in position b when a second field B is arriving. In all other modes, it is always in position A. In the 4:3 ColourPlus picture reproduction mode, the switch position is of no significance when the second field B is arriving.

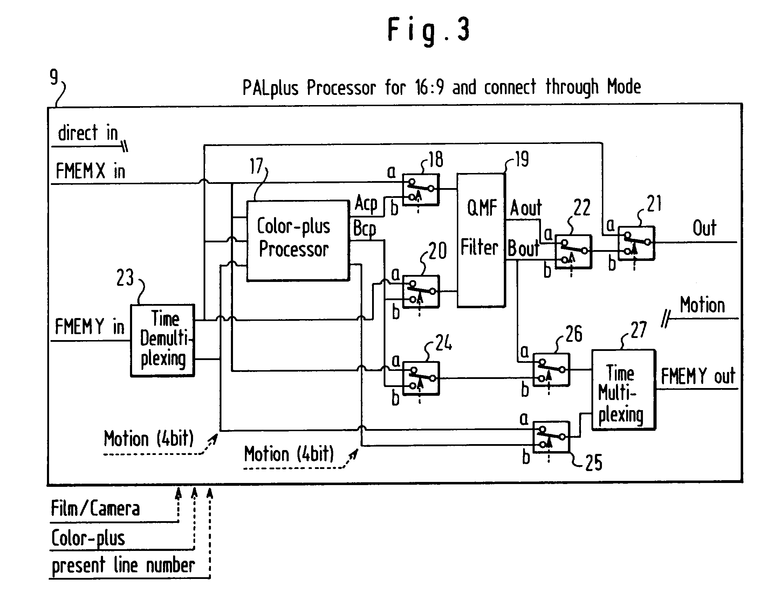

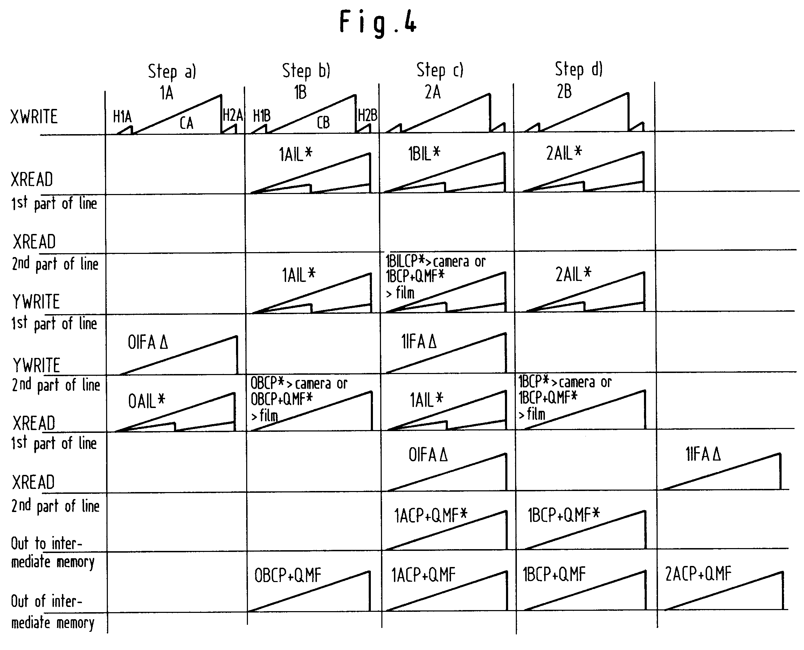

Figure 3 shows the structure of the PALplus processor 9 for the 16:9 modes. In Figure 4, the inputs and outputs of the PALplus processor 9 have the same references as in Figure 3. The "direct in" inputs and the "motion" output are not occupied in this configuration. The data arriving via the memory FMEM X 10 pass via a switch 18 to a QMF filter 19 either directly or through a ColourPlus processing unit 17 as ColourPlus pre-processed data of a first field A. They are further fed to a switch 24 which sends to a switch 26 either these data arriving from the first memory FMEM X 10 or the ColourPlus processed data of a second field B which arrive from the ColourPlus processing unit 17. The ColourPlus processed data of a second field B which are produced by the ColourPlus processing unit 17 likewise pass via a switch 20 to the QMF filter 19. For forwarding to the QMF filter 19, the switch 20 selects between these ColourPlus pre-processed data of the second field B or the data from the second memory FMEM Y 11 which pass through a time demultiplexer 23. The data passing through the time demultiplexer 23, which are read from the second memory FMEM Y 11, likewise pass to the ColourPlus processing unit 17 and to a switch 21 which switches through to the output either the data arriving from the time demultiplexer 23 or those from a switch 22. The time demultiplexer 23 outputs further motion data which are fed to a switch 25 either directly or via the ColourPlus processing unit 17. The switch 25 feeds the selected motion data to a time multiplexer 27, through which data are stored in the second memory FMEM Y 11. Also applied to the time multiplexer 27 are data arriving from the switch 26 which selects either the data arriving from the switch 24 or the data of a second field B processed by the QMF filter 19. These data of a second field B which are processed by the QMF filter, and the data of a first field A which are processed by the QMF filter 19, are together applied to a switch 22 which forwards to the switch 21 the data of either a first or a second field.

The switch positions of the individual switches will be described below. Switches 18 and 20 decide the ColourPlus processing by means of a bypass. In switch position a, the data directly arriving respectively from the first or second memories FMEM X 10 or FMEM Y 11 are forwarded directly to the QMF filter 19, while in switch position b they must first pass through the ColourPlus processing 17. Switch 24 selects whether ColourPlus processed data of a second field B or unprocessed data of a first field A, which arrive from the first memory FMEM X 10, are fed via the switch 26 and the time multiplexer 27 to the second memory FMEM Y 11. The switch 25 sends either newly produced motion data arriving from the ColourPlus processing unit 17 or motion data arriving from the second memory FMEM Y 11 via the time multiplexer 27 to the second memory FMEM Y 11. According to the film mode or camera mode and the respective first field A or second field B, the switch 21 selects the data output at the output of the PALplus processor 9. In the case of camera mode, switch 21 is always in switch position b. In film mode, switch 21 is in switch position b for the output of a first field A, in order to output data arriving from the QMF filter 19, and for output of a second field B is in switch position a in order to output the data of a second field B which are intermediately stored in the second memory FMEM Y 11. In the case of film mode, the switch 22 is always in switch position a, while in camera mode, depending on the field just processed by the QMF filter 19, it forwards either a first field A in switch position a or a second field B in switch position b. In film mode, the switch 26 is in switch position a, and in camera mode in switch position b.

Figure 4 shows a diagram intended to explain the PALplus decoding method according to the invention, which is performed by the vertical conversion and Motion Adaptive Colour Plus (MACP) image processing unit 8 shown in Figure 1. The image processing requires two 3 Mbit 12-bit wide memories FMEM X and FMEM Y 10, 11. The data applied to the image processing unit 8 are written into the first memory FMEM X 10 with their single clock frequency of 13.5 MHz. The further image processing takes place with a doubled clock frequency of 27 MHz, with which the data are output after they have been fully processed to a line memory 12 which in turn outputs them with the single clock frequency of 13.5 MHz. Owing to the double clock frequency used for the data processing, in the time in which the data of a field are written to the first memory FMEM X 10, twice the amount of data can be read out from it or written to the second memory FMEM Y 11 and/or read therefrom. Instead of processing with double speed, parallel processing with a plurality of image processing units may also be considered. All data produced in this way are henceforth marked * or ^{Δ}, the data marked * being respectively written and/or read in the 1st part of a line of the data arriving at the normal speed, and the data marked ^{Δ} being written and/or read in the 2nd part of this line.

The processing steps for processing a frame I for 16:9 film or camera reproduction with ColourPlus processing will be explained below.

In a step a), the digital picture data of a first field signal 1A, which are composed of the data of two helper signals H1A, H2A and a centre signal CA, are written to the first memory FMEM X 10 at the single speed. At the same time, the data of the previous frame 0 are processed, as explained in step c) explained below for the data of the first frame I, the averaged colour data 0 IFA^{Δ} of the preceding frame 0 being calculated and read to a range in the second memory FMEM Y 11, where they overwrite no longer required averaged colour data.

In a next step b), the digital data of the first field 1A are read from the first memory FMEM X 10 at the double speed and with data preprocessing in which the data of the two helper signals H1A, H2A are interleaved with the data of the centre signal CA. Directly after the respective data have been calculated, they are written to the second memory FMEM Y 11 and the memory locations of the first memory FMEM X 10 which have been freed by reading out the first field 1A are occupied with data of a second field 1B, which are composed of the data of two helper signals H1B, H2B and a centre signal CB.

In spite of the sequence of the incoming data (helper signal H1, centre signal C1 and helper signal H2), the interleaving gives the following sequence of the outgoing data: helper line, centre line, centre line, centre line, helper line, centre line, centre line, centre line, helper line, ... .

In a next step c), the data of the second field 1B are read from the first memory FMEM X 10 with data preprocessing in which the data of the two helper signals H1B, H2B are interleaved with the data of the centre signal CB, which produces the pre-processed data 1B IL* of the second field 1B. ColourPlus processing and vertical conversion in film mode requires the thus pre-processed data of the two fields 1A and 1B of the corresponding frame I. This condition is satisfied when producing the pre-processed data 1B IL* of the second field 1B, since the thus pre-processed data 1A IL* of the first field 1A are already in the second memory FMEM Y 11 and can be read therefrom. These pre-processed data 1A IL* and 1B IL* of the first and second fields 1A and 1B, as well as the averaged colour data 0 IFA^{Δ}, 1 IFA^{Δ} of the preceding and current frames 0 and 1 are used to calculate ColourPlus processed and vertically converted data 1A CP+QMF* and 1B CP+QMF* of the two fields 1A and 1B. In the case of 16:9 camera picture reproduction, owing to the processing speed of the processor, or for other reasons, it is also possible for as yet only ColourPlus processed and not yet vertically converted data 1B CP* of the second field 1B to be calculated. The thus obtained data for the first field 1A are output for intermediate storage to a line memory 12 which resets the double processing clock frequency from 27 MHz back to the single output clock frequency of 13.5 MHz. The calculated data 1B CP+QMF* or 1B CP* of the second field 1B are respectively stored in memory locations of the second memory FMEM Y 11 which are occupied by no longer required data, after the pre-processed data 1A IL* of the first field 1A have been read from the second memory FMEM Y 11. Simultaneously with these computation, storage and output operations for the processed data of the two fields 1A and 1B, the averaged colour data 1 IFA^{Δ} of this frame I are calculated from the pre-processed data 1A IL* and 1B IL* of the first and second fields 1A and 1B, and are stored in the memory locations of the second memory FMEM Y 11 which are occupied by the averaged colour data 0 IFA^{Δ} of the previous frame 0. Furthermore, the memory locations freed in the first memory FMEM X 10 by reading out the second field 1B are occupied with the data of a first field 2A of a subsequent frame II, which are composed of the data of two helper signals and a centre signal.

In a step d), the data of the subsequent frame II are processed according to step b), and the data 1B CP+QMF* or 1B CP* of the second field which are stored in the second memory FMEM Y 11 are read out. In the case of 16:9 camera picture reproduction, they have further been vertically converted, and the fully processed data 1B CP+QMF* are subsequently output to the line memory 12 which again reduces the output clock frequency to 13.5 MHz.

In film picture reproduction, averaged colour data are not calculated or stored.

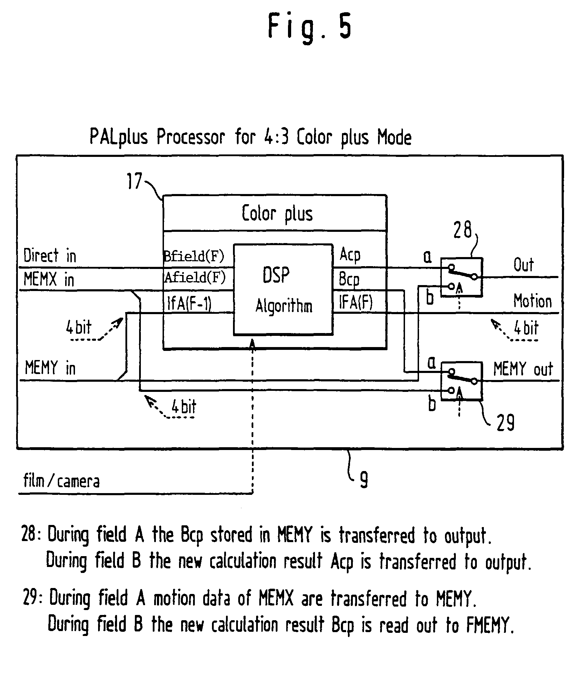

Figure 5 shows the PALplus processor 9 constructed for the 4:3 ColourPlus mode. In this case, data of a second field B which arrive via the direct input, and the data of a first field A which arrive from the first memory FMEM X 10 are applied together with the motion data, that is to say averaged colour data IFA^{Δ} of a preceding frame, which arrive from the second memory FMEM Y 11, to the ColourPlus processing unit 17 which feeds the ColourPlus processed data of the first field A to a switch 28, which outputs either these data provided directly after the calculation or the data intermediately stored in the second memory FMEM Y 11. The ColourPlus processed data of the second field B, which are calculated by the ColourPlus processing unit 17 simultaneously with the ColourPlus data of the first field A, are stored in the second memory FMEM Y 11 via a switch 29. Using the switch 29, the data read from the first memory FMEM X 10 can also selectively be stored in the second memory FMEM Y 11. The motion data produced by the ColourPlus processing unit 17 are applied to the "motion" output of the PALplus processor. In the case of a first frame A, the switch 28 switches the ColourPlus processed data of the second field B which are stored in the second memory FMEM Y 11 to the output, and in the case of a second field B, it switches to the output the ColourPlus processed data of the first field A which have just been calculated. The switch 29 selects the data to be stored in the second memory FMEM Y 11 on the basis of the field just applied. In the case of a first field A, it selects the motion data which are stored in the first memory FMEM X 10, while in the case of a second field B, it selects the ColourPlus processed data of the second field B.

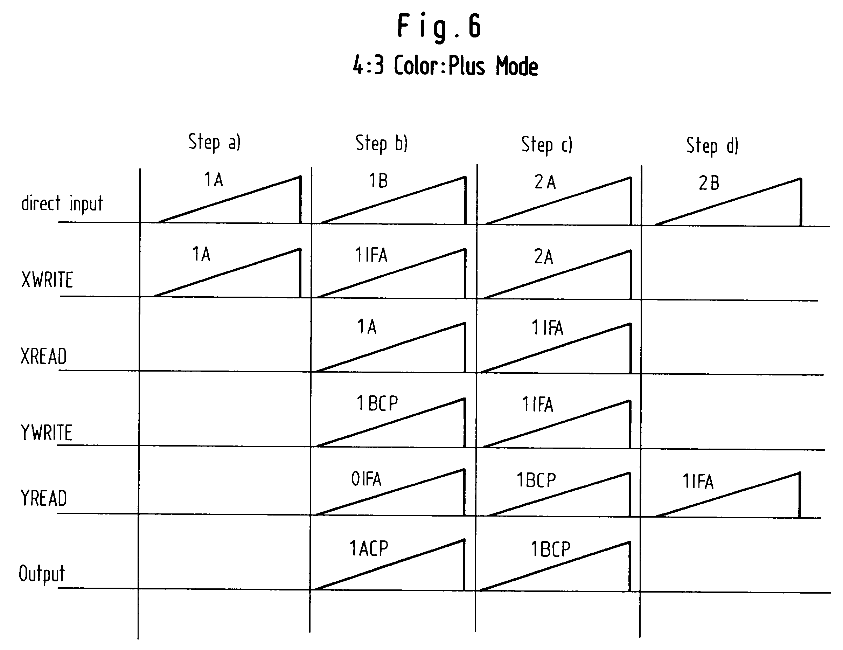

Figure 6 represents the process steps needed for ColourPlus processing in 4:3 picture reproduction mode.

In a first step, the data of a first field 1A are stored in the first memory FMEM X 10.

In a second step, the data of the first field 1A which are read from the first memory FMEM X 10 and the data of a second field 1B which are applied directly to the PALplus processor 9 are used to calculate the motion data of this first frame I which is composed of the two first fields 1A and 1B, and these motion data are stored in the first memory FMEM X 10. At the same time, the data of the two first fields 1A and 1B, and the motion data 0 IFA of a preceding frame 0 which are stored in the second memory FMEM Y 11, are used to calculate the ColourPlus processed data of the first and second fields 1A CP, 1B CP. The ColourPlus processed data of the first field 1A CP are output directly, while the ColourPlus processed data of the second field 1B CP are stored in the second memory FMEM Y 11.

In a third step, the motion data 1 IFA are read from the first memory FMEM X 10 and written to the second memory FMEM Y 11, while the ColourPlus processed data of the second field 1B CP are read therefrom and output. At the same time, the data of a subsequent first field 2A are stored in the first memory FMEM X 10.

In film mode, averaged colour data are not calculated and stored.

These processing steps are performed with the single data rate of the data entering and leaving the processor. The outgoing ColourPlus processed picture data have a field delay with respect to the corresponding picture data which are entering and have not yet been ColourPlus processed.

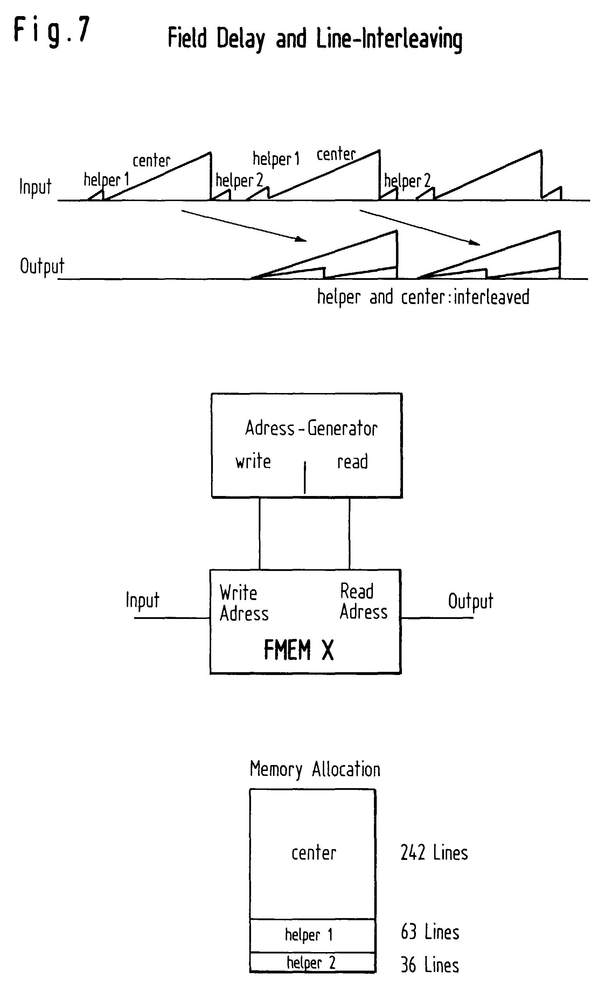

Figure 7 explains the manner of memory occupation of the two memories FMEM X 10 and FMEM Y 11 during the vertical conversion. The figure shows the memory size needed owing to the write and read sequences. Data entering the first memory FMEM X 10 still, for example, consist of a helper signal H1, a centre signal C1 and a helper signal H2. Each helper signal has 36 lines, while a centre signal has 215 lines. After a delay time corresponding to 36 lines, the first memory FMEM X 10 again receives the data of a field whose data are constructed as those of the previously received field. Since the data are to be read out from the memory while being interleaved in the form: helper line, centre line, centre line, centre line, helper line, centre line, centre line, centre line, helper line ..., the arrangement of the incoming data leads to the following minimum required memory sizes:
Centre memory:
   215 lines plus 1/8·215 lines = 215 lines + 27 lines = 242 lines
Memory for first helper signal:
   36 lines + 3/4·36 lines = 36 lines + 27 lines = 63 lines
Memory for second helper signal:
   36 lines.

A minimum capacity of 341 lines thus results for storing the data of a field. The memory size needed for storing the motion data and the size of conventional memories should also be taken into consideration for the memory size of the memories FMEM X and FMEM Y 10, 11 which are used. The individual memories are organized as cyclic memories.

Although the description of the teaching of the invention relates to a PALplus reproduction method, the person skilled in the art will understand that the subject-matter of the invention is also useable for other wide-screen reproduction methods, for example NTSC-EDTV-II in Japan, so long as the normative system specification for it permits this application.

## Claims

1. Method for decoding a television signal for wide-screen reproduction in at least one picture reproduction mode with ColourPlus image processing, characterized in that the image processing required for ColourPlus image processing and for vertical conversion are carried out in conjunction.

2. Method for television signal decoding according to Claim 1, characterized in that, for the production of the data of the fields of a frame which are processed for the wide-screen reproduction, digital picture data which are no longer required and are stored in a memory for the digital image processing, are directly replaced by new digital picture data which are obtained by digital image processing in the picture synthesizing for the wide-screen reproduction, or are data of a subsequent digital field.

3. Method for PALplus decoding according to Claim 1 or 2, characterized in that the data of the processed fields are delayed by a whole number of fields relative to the data of the arriving fields.

4. Method for television decoding according to one of Claims 1 to 3, characterized by the following processing steps for processing a frame (I) in the case of 16:9 film reproduction with ColourPlus processing, the steps denoted by the same letters being carried out in parallel or substantially in parallel:
a1) digital picture data of a first field signal (1A), which are composed of the data of two helper signals (H1A, H2A) and a centre signal (CA) are stored in a first memory FMEM X (10),
a2) data processing for the data of the previous frame (0) in accordance with the following steps c1) to c5),
b1) the digital data of the first field (1A) are read from the first memory FMEM X (10) with data pre-processing in which the data of the two helper signals (H1A, H2A) are interleaved with the data of the centre signal (CA),
b2) the thus pre-processed data (1A IL*) of the first field (1A) are written to the second memory FMEM Y (11), the memory locations freed when the first field (1A) was read from the first memory FMEM X (10) being occupied by data of a second field (1B), which are composed of the data of two helper signals (H1B, H2B) and a centre signal (CB);
c1) the data of the second field (1B) are read from the first memory FMEM X (10) with data pre-processing in which the data of the two helper signals (H1B, H2B) are interleaved with the data of the centre signal (CB), in order to produce the pre-processed data (1B IL*) of the second field (1B),
c2) the pre-processed data (1A IL*) of the first field (1A) are read from the second memory FMEM Y (11),
c3) ColourPlus processed and vertically converted data (1A CP+QMF*) of the first field (1A) are calculated from the pre-processed data (1A IL*, 1B IL*) of the first and second fields (1A, 1B) and are output to a line memory (12) for intermediate storage,
c4) ColourPlus processed and vertically converted data (1B CP+QMF*) of the second field (1B) are calculated from respectively the pre-processed data (1A IL*, 1B IL*) of the first and second fields (1A, 1B), these data being respectively stored in memory locations of the second memory FMEM Y (11) which are occupied by no longer required data,
c5) the memory locations freed in the first memory FMEM X (10) by reading the second field (1B) are occupied with the data of a first field (2A) of a subsequent frame (II), which are composed of the data of two helper signals and a centre signal; thereupon
d1) data processing for the subsequent frame (2) in accordance with steps b1) and b2), and
d2) reading of the fully processed data (1B CP+QMF*) of the second field (1B) from the second memory FMEM Y (11) and output to the line memory (12).

5. Method for television decoding according to one of Claims 1 to 3 in connection with Claim 4, characterized by the following processing steps differing from the processing steps a2), c2), c3), c4) and d2) of Claim 4, and the additional processing step c6') for processing a frame (I) in the case of 16:9 camera picture reproduction with ColourPlus processing:
a2') data processing for the data of the previous frame (0) in accordance with the following steps c1) to c6), the averaged colour data (0 IFA^{Δ}) of the preceding frame (0) being calculated and read into a second memory FMEM Y (11) simultaneously,
c2') the pre-processed data (1A IL*) of the first field (1A) and the averaged colour data (0 IFA^{Δ}) of the preceding frame (0) are read from the second memory FMEM Y (11),
c3') ColourPlus processed and vertically converted data (1A CP+QMF*) of the first field (1A) are calculated from the pre-processed data (1A IL*, 1B IL*) of the first and second fields (1A, 1B) as well as the averaged colour data (0 IFA^{Δ}, 1 IFA^{Δ}) of the preceding and current frames (0, 1) and are output to a line memory (12) for intermediate storage,
c4') ColourPlus processed data (1B IL CP*) of the second field (1B) are calculated from the pre-processed data (1A IL*, 1B IL*) of the first and second fields (1A, 1B) and the averaged colour data (0 IFA^{Δ}, 1 IFA^{Δ}) of the preceding and current frames (0, 1), these data being respectively stored in memory locations of the second memory FMEM Y (11) which are occupied by no longer required data,
c6') the averaged colour data (1 IFA^{Δ}) of this frame (I) are calculated from the pre-processed data (1A IL*, 1B, IL*) of the first and second fields (1A, 1B) and are stored in memory locations of the second memory FMEM Y (11) which are occupied by the averaged colour data (0 IFA^{Δ}) of the previous frame (0), and
d2') the ColourPlus processed data (1B IL CP*) of the second field (1B) are read from the second memory FMEM Y (11), and ColourPlus processed and vertically converted data (1B CP+QMF*) are calculated therefrom and output to the line memory (12).

6. Method for television signal decoding according to one of Claims 1 to 5, characterized in that the data processing is carried out with a clock frequency which is higher than the clock frequency of the incoming and outgoing data.

7. Method for television signal decoding according to Claim 5, characterized in that the data processing is carried out with a clock frequency which is twice the clock frequency of the incoming and outgoing data.

8. Method for television signal decoding according to one of Claims 1 to 7, characterized in that the data processing is carried out by a processor.

9. Method for television signal decoding according to one of Claims 1 to 7, characterized in that the data processing is carried out by a plurality of processors connected in parallel.

10. Method for television signal decoding according to one of Claims 1 to 9, characterized in that the television signal decoding is a PALplus decoding and a 16:9 picture reproduction is chosen as the wide-screen reproduction.

11. Device for television signal decoding for at least one wide-screen reproduction mode with ColourPlus image processing, characterized by an image processor which carries out ColourPlus image processing and vertical conversion in conjunction.

12. Device for television signal decoding according to Claim 11, characterized in that the processor operates with a clock frequency which is twice the frequency of the incoming data.

13. Device for television signal decoding according to Claim 11 or 12, characterized in that the processor is also designed for processing other picture reproduction modes in accordance with a respective system description.

14. Device for television signal decoding according to Claim 11, characterized in that, for a normal picture reproduction mode with ColourPlus image processing, the processor can be set to a clock frequency equal to the frequency of the incoming data.

15. Device for television signal decoding according to one of Claims 11 to 14, characterized in that the television signal decoding is a PALplus decoding, a 16:9 picture reproduction is chosen as the wide-screen reproduction, and a 4:3 picture reproduction is chosen as the normal picture reproduction.
